(19) Europäisches Patentamt / European Patent Office / Office européen des brevets

(11) **EP 1 904 821 B1**

(12) **FASCICULE DE BREVET EUROPEEN**

(45) Date de publication et mention de la délivrance du brevet:
**22.06.2011 Bulletin 2011/25**

(51) Int Cl.:
*G01L 3/24* *(2006.01)*    *B64D 45/00* *(2006.01)*

(21) Numéro de dépôt: 06794168.2

(22) Date de dépôt: **13.07.2006**

(86) Numéro de dépôt international:
**PCT/FR2006/001709**

(87) Numéro de publication internationale:
**WO 2007/010118 (25.01.2007 Gazette 2007/04)**

(54) **INDICATEUR DE PILOTAGE POUR UN AERONEF, DESTINE A FOURNIR UN PARAMETRE DE PUISSANCE D'AU MOINS UN TURBOPROPULSEUR DUDIT AERONEF**

INDIKATOR ZUM LENKEN EINES FLUGZEUGES MIT BEREITSTELLUNG EINES LEISTUNGSPARAMETERS VON MINDESTENS EINEM TURBOMOTOR DIESES FLUGZEUGES

INDICATOR FOR PILOTING AN AIRCRAFT, DESIGNED TO PROVIDE A POWER PARAMETER OF AT LEAST ONE TURBOPROP ENGINE OF SAID AIRCRAFT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.07.2005 FR 0507568**

(43) Date de publication de la demande:
**02.04.2008 Bulletin 2008/14**

(73) Titulaire: **Airbus SAS**
**31700 Blagnac (FR)**

(72) Inventeur: **COTTET, Jean-Philippe**
**F-31650 Auzielle (FR)**

(74) Mandataire: **Hauer, Bernard**
**Bloch & Bonnétat**
**23bis, rue de Turin**
**75008 Paris (FR)**

(56) Documents cités:
**US-A- 3 181 353    US-A- 3 721 120**
**US-A- 5 886 649    US-A1- 2004 215 375**

**Description**

La présente invention concerne un indicateur de pilotage pour un aéronef, destiné à fournir un paramètre de puissance d'au moins un turbopropulseur dudit aéronef, en particulier d'un avion de transport.

On sait qu'un turbopropulseur comprend une turbine à gaz qui entraîne une ou plusieurs hélices par l'intermédiaire d'un réducteur.

La présente invention a pour objet d'afficher un paramètre de conduite moteur pour un tel turbopropulseur, paramètre qui peut également être utilisé de façon usuelle par un système de commande approprié pour commander ledit turbopropulseur.

Généralement, un tel indicateur de pilotage comporte :

- des sources d'informations ;
- des moyens de traitement d'informations reçues desdites sources d'informations ; et
- des moyens d'affichage susceptibles de présenter sur au moins un écran de visualisation des données issues desdits moyens de traitement, telles que ledit paramètre de conduite moteur. Un tel indicateur de pilotage est présenté dans US-A-2004/0215375.

On notera que l'une des difficultés pour élaborer un tel paramètre de conduite moteur, est qu'un turbopropulseur présente un domaine d'utilisation normale qui comprend différents régimes de rotation de l'hélice. Le paramètre qui est usuellement utilisé à cet effet pour ce type de turbopropulseur est le couple sur l'arbre de l'hélice. Toutefois, un tel paramètre est représentatif de la puissance moteur uniquement à régime de rotation constant. Il n'est donc pas en mesure d'indiquer la puissance existant sur l'ensemble du domaine d'utilisation normale dudit turbopropulseur.

La présente invention a pour objet de remédier à ces inconvénients. Elle concerne un indicateur de pilotage, particulièrement lisible et compréhensible, qui est destiné à fournir un paramètre de puissance d'au moins un turbopropulseur d'un aéronef, permettant de restituer de façon cohérente la puissance dans l'ensemble du domaine de fonctionnement du turbopropulseur, c'est-à-dire de la traction directe maximale à la traînée maximale en inversion de poussée.

A cet effet, selon l'invention, ledit indicateur de pilotage du type comportant :

- des sources d'informations ;
- des moyens de traitement d'informations reçues desdites sources d'informations ; et
- des moyens d'affichage susceptibles de présenter sur au moins un écran de visualisation des données issues desdits moyens de traitement,

est remarquable en ce que :

- lesdites sources d'informations déterminent les valeurs de paramètres relatifs à l'hélice et à la turbine du turbopropulseur, ainsi que les valeurs de paramètres relatifs à l'aéronef ;
- lesdits moyens de traitement calculent, à partir de ces valeurs, un paramètre de puissance qui tient compte du rapport entre la puissance courante du turbopropulseur et la puissance maximale obtenue sans prélèvement d'air au niveau de la mer en atmosphère standard ; et
- lesdits moyens d'affichage présentent, sur l'écran de visualisation, au moins un signe caractéristique illustrant ledit paramètre de puissance.

De préférence, lesdits moyens de traitement déterminent ledit paramètre de puissance PIT, à l'aide de l'expression suivante :

$$PIT = 100.A.(TQc.NPc - PWRr) / (PWRmax - PWRr)$$

dans laquelle :

- A correspond au signe de $\beta$-$\beta$O, $\beta$ représentant l'incidence courante mesurée des pales de l'hélice du turbopropulseur, et $\beta$O représentant l'incidence au sol au ralenti desdites pales ;
- TQc représente le couple courant sur l'arbre de la turbine libre ;
- NPc représente le régime courant mesuré de l'hélice du turbopropulseur, le produit TQc.NPc formant ladite puissance courante ;
- PWRmax représente ladite puissance maximale ; et

- PWRr représente une puissance de référence prédéterminée.

Ce paramètre de puissance PIT tient donc compte en particulier :

- d'une puissance de référence PWRr qui permet d'éviter des sauts d'indication au voisinage des puissances faibles ;
- du signe de β-βO qui permet de représenter le fonctionnement en mode frein et moulinet (traction négative), qui est caractéristique du fonctionnement en mode d'inversion du turbopropulseur ; et
- de la valeur 100 qui permet d'obtenir une indication en pourcentage de la puissance maximale, comme précisé ci-dessous.

Ainsi, grâce à l'invention, ledit indicateur de pilotage fournit au pilote un paramètre de puissance PIT qui permet d'assurer les fonctions suivantes :

- indiquer à tout instant du vol la puissance développée par le turbopropulseur ;
- indiquer la réservé de puissance disponible par rapport à la puissance maximale ;
- fournir au pilote des informations suffisantes sur le comportement de cette puissance dans les phases transitoires ; et
- simplifier les limitations usuelles du régime de rotation maximal ou du couple moteur, en fournissant au pilote une indication de limitation unique.

On notera que ledit indicateur est bien un indicateur de pilotage et non pas un simple indicateur de surveillance du moteur, puisqu'il fournit un paramètre de puissance opérationnel tenant compte de l'intégration du turbopropulseur sur l'aéronef, et ceci en fonctionnement.

Dans un mode de réalisation préféré, lesdits moyens d'affichage présentent, sur ledit écran de visualisation, un cadran qui est gradué en pourcentage et qui est muni d'une aiguille représentant ledit signe caractéristique, et dont la position sur ledit cadran est représentative dudit paramètre de puissance calculé par lesdits moyens de traitement.

En outre, avantageusement, ledit cadran comporte une première partie relative à un fonctionnement en traction du turbopropulseur et une seconde partie relative à un fonctionnement en mode d'inversion de poussée dudit turbopropulseur.

L'indicateur de pilotage conforme à l'invention permet donc une lecture simple, rapide et facilement compréhensible dudit paramètre de puissance.

Dans un mode de réalisation particulier, ledit indicateur de pilotage comporte, de plus, un moyen de surveillance pour surveiller le signe de β-βO et pour détecter l'apparition d'une valeur négative pour ce signe, et lesdits moyens d'affichage sont formés de manière à présenter ladite seconde partie du cadran sur ledit écran de visualisation, uniquement lorsque ledit moyen de surveillance a détecté l'apparition d'une valeur négative pour ledit signe.

Les figures du dessin annexé feront bien comprendre comment l'invention peut être réalisée. Sur ces figures, des références identiques désignent des éléments semblables.

La figure 1 est le schéma synoptique d'un indicateur de pilotage conforme à l'invention.

La figure 2 illustre un écran de visualisation d'un indicateur de pilotage conforme à l'invention, lors d'un fonctionnement en mode d'inversion.

Les figures 3A, 3B et 3C illustrent un même écran de visualisation d'un indicateur de pilotage conforme à l'invention, dans trois situations différentes et successives, à savoir respectivement lors d'un fonctionnement en traction, lors d'une phase de transition et lors d'un fonctionnement en mode d'inversion d'un turbopropulseur.

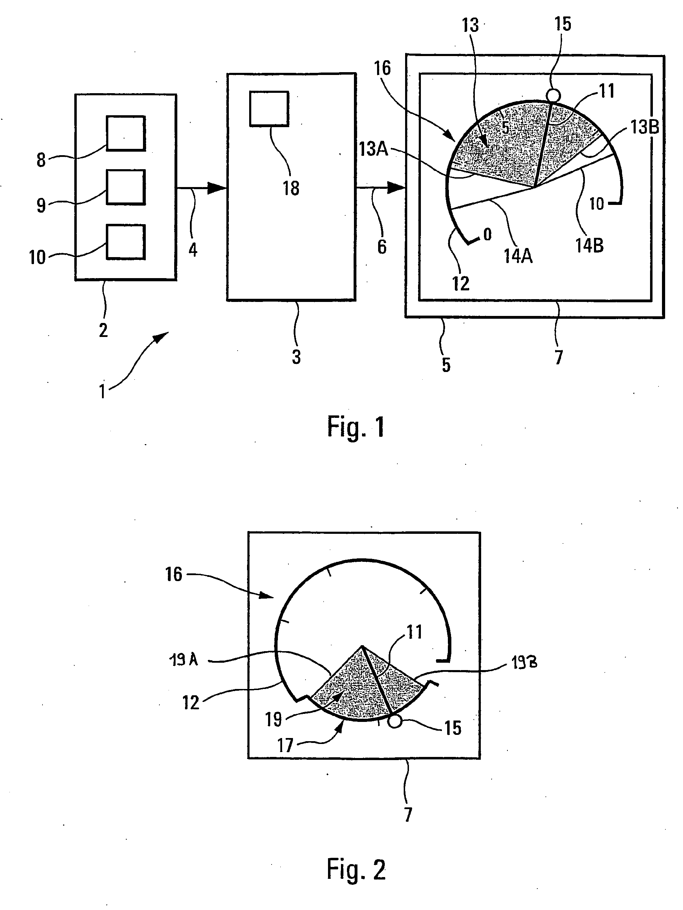

L'indicateur de pilotage 1 conforme à l'invention et représenté schématiquement sur la figure 1, est destiné à fournir sur un aéronef, en particulier un avion de transport, un paramètre de puissance d'au moins un turbopropulseur non représenté dudit aéronef. Un tel turbopropulseur comprend, de façon usuelle, une turbine à gaz qui entraîne au moins une hélice par l'intermédiaire d'un réducteur associé à un arbre d'hélice.

A cet effet, ledit indicateur de pilotage 1 qui est embarqué, comporte de façon connue :

- un ensemble 2 de sources d'informations fournissant les informations précisées ci-dessous ;
- des moyens 3 de traitement des informations qui sont reçues dudit ensemble 2 de sources d'informations par l'intermédiaire d'une liaison 4 ; et
- des moyens d'affichage 5 qui sont reliés par l'intermédiaire d'une liaison 6 auxdits moyens 3 et qui sont susceptibles de présenter des données issues desdits moyens de traitement 3 sur au moins un écran de visualisation 7.

Selon l'invention :

EP 1 904 821 B1

- ledit ensemble 2 de sources d'informations comporte :

  ■ des moyens 8 pour déterminer les valeurs de paramètres (précisés ci-dessous) relatifs à l'hélice du turbopropulseur ;
  ■ des moyens 9 pour déterminer les valeurs de paramètres (précisés ci-dessous) relatifs à la turbine du turbopropulseur ; et
  ■ des moyens 10 pour déterminer les valeurs de paramètres (précisés ci-dessous) relatifs à l'aéronef, sur lequel est monté ledit turbopropulseur ;

- lesdits moyens de traitement 3 calculent, à partir des valeurs reçues dudit ensemble 2 de sources d'informations, un paramètre de puissance PIT qui tient compte du rapport entre la puissance courante du turbopropulseur PWRc et la puissance maximale PWRmax obtenue sans prélèvement d'air au niveau de la mer en atmosphère standard pour des conditions TOGA ("Take-Off / Go-Around" en anglais, c'est-à-dire décollage / remise des gaz) ; et
- lesdits moyens d'affichage 5 présentent, sur l'écran de visualisation 7, au moins un signe caractéristique 11 illustrant ledit paramètre de puissance PIT, comme précisé ci-dessous.

De préférence, lesdits moyens de traitement 3 calculent ledit paramètre de puissance PIT, à l'aide de l'expression suivante :

PIT=100.A.(TQc.NPc - PWRr) / (PWRmax - PWRr)

dans laquelle :

- A_correspond au signe de β-βO. β représente l'incidence courante mesurée (à l'aide d'un moyen de mesure approprié faisant partie des moyens 8) des pales de l'hélice du turbopropulseur, et βO représente une valeur prédéterminée représentant l'incidence au sol au ralenti desdites pales ;
- TQc représente le couple courant sur l'arbre de la turbine libre ;
- NPc représente le régime courant mesuré (à l'aide d'un moyen de mesure approprié faisant partie des moyens 8) de l'hélice du turbopropulseur. Le produit TQc.NPc forme la puissance courante PWRc précitée ;
- PWRmax représente ladite puissance maximale ; et
- PWRr représente une puissance de référence prédéterminée.

Ce paramètre de puissance PIT tient donc compte en particulier :

- d'une puissance de référence PWRr qui permet d'éviter des sauts d'indication (sur l'affichage) au voisinage des puissances faibles ;
- du signe de β-βO qui permet de représenter le fonctionnement en mode frein et moulinet (traction négative) du turbopropulseur, qui est caractéristique du fonctionnement en mode d'inversion ; et
- de la valeur 100 qui permet d'obtenir une indication en pourcentage de la puissance maximale, comme précisé ci-dessous.

Ainsi, grâce à l'invention, ledit indicateur de pilotage 1 fournit au pilote un paramètre de puissance PIT qui permet d'assurer les fonctions suivantes :

- indiquer à tout instant du vol la puissance développée par le turbopropulseur ;
- indiquer la réserve de puissance disponible par rapport à la puissance maximale PWRmax ;
- fournir au pilote des informations suffisantes sur le comportement de cette puissance dans les phases transitoires ; et
- simplifier les limitations usuelles du régime de rotation maximal ou du couple moteur, en fournissant au pilote une indication de imitation unique.

On notera que ledit indicateur 1 conforme à l'invention est bien un indicateur de pilotage et non pas un simple indicateur de surveillance du moteur, puisqu'il fournit un paramètre de puissance PIT opérationnel tenant compte de l'intégration dudit turbopropulseur sur l'aéronef (notamment grâce aux mesures réalisées à l'aide des moyens 10), et ceci en fonctionnement (notamment grâce aux mesures réalisées à l'aide des moyens 8 et 9).

Dans un mode de réalisation particulier, lesdits moyens 8, 9 et 10 fournissent au moins les données suivantes, permettant aux moyens de traitement 3 de calculer le paramètre de puissance PIT :

- des informations des centrales anémométriques ;

4

- l'état de l'automanette ;
- l'état des prélèvements d'air ;
- les paramètres d'état du cycle thermodynamique du moteur ; et
- le régime de rotation de l'hélice.

Lesdits moyens de traitement 3 déterminent ledit couple courant TQc de manière usuelle.

Comme on peut le voir sur les figures, lesdits moyens d'affichage 5 présentent sur ledit écran de visualisation 7 un cadran 12 qui est gradué en pourcentage (de 0% à 100%) et dont le maximum ("10", c'est-à-dire 100%) représente ladite puissance maximale PWRmax. Le cadran 12 est muni d'une aiguille 11, par exemple de couleur verte, dont la position sur ledit cadran 12 indique la valeur dudit paramètre de puissance PIT déterminé par lesdits moyens de traitement 3. Sur la figure 1, on a représenté de plus (en gris) un secteur circulaire 13 sur ledit cadran 12, qui est délimité par des limites 13A et 13B et qui illustre le domaine de fonctionnement normal du turbopropulseur. Pour différencier ce secteur circulaire 13 du fond du cadran 12, ledit secteur circulaire 13 présente, par exemple, une couleur ou un noircissement qui est différent de celui dudit fond.

L'indicateur de pilotage 1 conforme à l'invention permet donc une lecture simple, rapide et facilement compréhensible dudit paramètre de puissance PIT.

L'écran de visualisation 5 comporte, de plus, sur le cadran gradué 12 :

- des limites 14A et 14B qui indiquent :

  ■ la valeur de PIT au ralenti vol au régime minimal de rotation de l'hélice ; et
  ■ la valeur maximale de PIT (puissance maximale disponible au point de vol = couple maximal x régime maximal de rotation) ; et

- un symbole 15, par exemple un rond bleu, qui indique la puissance commandée, à savoir l'angle du levier de commande de poussée TLA ("Thrust Lever Angle" en anglais).

Par ailleurs, ledit cadran 12 comporte, comme représenté sur la figure 2, une partie 16 supérieure qui est relative à un fonctionnement en traction du turbopropulseur, tel que représenté sur la figure 1 par exemple, et une partie 17 inférieure qui est relative à un fonctionnement en mode d'inversion de poussée dudit turbopropulseur.

Dans un mode de réalisation particulier, ledit indicateur de pilotage 1 comporte, de plus, un moyen de surveillance 18 qui est par exemple intégré dans les moyens de traitement 3 et qui est destiné à surveiller le signe de β-βO de manière à émettre un signal d'alerte lors de l'apparition d'une valeur négative pour ce signe. En outre, lesdits moyens d'affichage 5 sont formés de manière à présenter ladite partie inférieure 17 du cadran 12 sur ledit écran de visualisation 7, uniquement lorsque ledit moyen de surveillance 18 a détecté l'apparition d'une valeur négative pour ledit signe de β-βO, qui est représentative d'une traction négative. Ceci est par exemple le cas pour l'exemple de la figure 2, qui illustre donc un fonctionnement en mode d'inversion de traction.

La partie 17 du cadran 12 est également graduée, et elle peut comporter un secteur circulaire 19 (délimité par des limites 19A et 19B) qui est similaire, pour le mode de fonctionnement en inversion, audit secteur circulaire 13 prévu pour le mode de fonctionnement en traction. La partie 17 supérieure reste, quant à elle, toujours affichée quelle que soit le mode de fonctionnement du turbopropulseur.

L'indicateur de pilotage 1 conforme à l'invention permet donc de restituer de façon cohérente la puissance du turbopropulseur dans tout l'ensemble du domaine de fonctionnement de ce dernier, c'est-à-dire de la traction directe maximale à la traînée maximale en inversion de poussée.

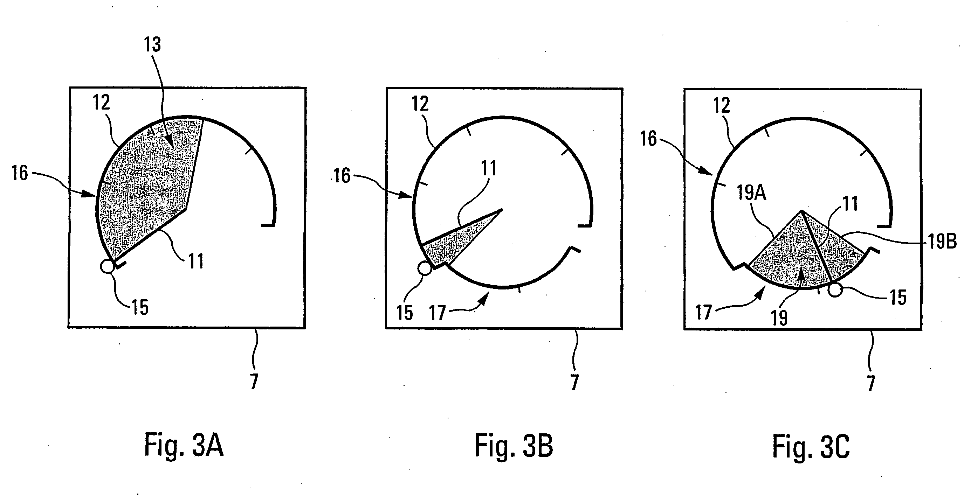

Sur les figures 3A, 3B et 3C, on a représenté trois situations successives, correspondant respectivement à :

- un fonctionnement en traction ;
- une phase transitoire (entre un fonctionnement en traction et un fonctionnement en mode d'inversion de poussée) ; et
- un fonctionnement en mode d'inversion de poussée.

On peut également prévoir sur la partie 16 du cadran 12 un signe caractéristique (non représenté), par exemple un onglet rouge, qui fournit une indication de limitation du moteur, en illustrant la limite du paramètre de puissance PIT correspondant à l'une des limitations du moteur (couple ou puissance).

**Revendications**

1. Indicateur de pilotage pour un aéronef, destiné à fournir un paramètre de puissance d'au moins un turbopropulseur dudit aéronef, ledit turbopropulseur comprenant une turbine à gaz entraînant en rotation au moins une hélice, ledit indicateur de pilotage (1) comportant :

- des sources d'informations (2) qui déterminent au moins les valeurs de paramètres relatifs à l'aéronef ;
- des moyens (3) de traitement d'informations reçues desdites sources d'informations (2) ; et
- des moyens d'affichage (5) susceptibles de présenter sur au moins un écran de visualisation (7) des données issues desdits moyens de traitement (3), et au moins un signe caractéristique (11) illustrant ledit paramètre de puissance,

**caractérisé en ce que** :

- lesdites sources d'informations (2) déterminent de plus les valeurs de paramètres relatifs à l'hélice et à la turbine du turbopropulseur ;
- lesdits moyens de traitement (3) calculent, à partir des valeurs déterminées par lesdites sources d'informations (2), un paramètre de puissance qui tient compte du rapport entre la puissance courante du turbopropulseur et la puissance maximale obtenue sans prélèvement d'air au niveau de la mer en atmosphère standard ; et
- lesdits moyens de traitement (3) calculent ledit paramètre de puissance PIT, à l'aide de l'expression suivante :

$$PIT = 100.A.(TQc.NPc - PWRr) / (PWRmax - PWRr)$$

dans laquelle :

. A correspond au signe de β-βO, β représentant l'incidence courante mesurée des pales de l'hélice du turbopropulseur, et βO représentant l'incidence au sol au ralenti desdites pales ;
. TQc représente le couple courant sur l'arbre de la turbine libre ;
. NPc représente le régime courant mesuré de l'hélice du turbopropulseur, le produit TQc.NPc formant ladite puissance courante ;
. PWRmax représente ladite puissance maximale ; et
. PWRr représente une puissance de référence prédéterminée.

2. Indicateur de pilotage selon la revendication 1,
**caractérisé en ce que** lesdits moyens d'affichage (5) présentent, sur ledit écran de visualisation (7), un cadran (12) qui est gradué en pourcentage et qui est muni d'une aiguille (11) représentant ledit signe caractéristique, et dont la position sur ledit cadran (12) est représentative dudit paramètre de puissance calculé par lesdits moyens de traitement (3).

3. Indicateur de pilotage selon la revendication 2,
**caractérisé en ce que** ledit cadran (12) comporte une première partie (16) relative à un fonctionnement en traction du turbopropulseur et une seconde partie (17) relative à un fonctionnement en mode d'inversion de poussée dudit turbopropulseur.

4. Indicateur de pilotage selon l'une des revendications 2 et 3,
**caractérisé en ce qu'**il comporte, de plus, un moyen de surveillance (18) pour surveiller le signe de β-βO et pour détecter l'apparition d'une valeur négative pour ce signe, et **en ce que** lesdits moyens d'affichage (5) sont formés de manière à présenter ladite seconde partie (17) du cadran (12) sur ledit écran de visualisation (7), uniquement lorsque ledit moyen de surveillance (18) a détecté l'apparition d'une valeur négative pour ledit signe.

5. Aéronef,
**caractérisé en ce qu'**il comporte un indicateur de pilotage (1) tel que celui spécifié sous l'une quelconque des revendications 1 à 4.

**Claims**

1. A flight control indicator for an aircraft, intended to provide a power parameter pertaining to at least one turboprop of said aircraft, said turboprop comprising a gas turbine driving the rotation of at least one propeller, said flight control indicator (1) comprising:

  - data sources (2) which determine at least the values of parameters relating to the aircraft;
  - data processing means (3) for processing the data received from said data sources (2); and
  - display means (5) capable of displaying, on at least one display screen (7), data from said processing means (3), and at least one characteristic sign (11) illustrating said power parameter,

**characterized in that** :

  - said data sources (2) additionally determine the values of parameters relating to the propeller and to the turbine of the turboprop;
  - said processing means (3) calculate, from the values determined by said data sources (2), a power parameter that takes account of the ratio between the current power of the turboprop and the maximum power obtained without air bleed at sea level in a standard atmosphere; and
  - said processing means (3) calculate said power parameter PIT using the following expression:

$$PIT = 100.A.(TQc.NPc - PWRr)/(PWRmax - PWRr)$$

in which:

  • A corresponds to the sign of $\beta$-$\beta 0$, $\beta$ representing the current measured angle of incidence of the blades of the propeller of the turboprop, and $\beta 0$ representing the angle of incidence of said blades on the ground at idle;
  • TQc represents the current torque on the shaft of the free turbine;
  • NPc represents the current measured speed of the propeller of the turboprop, the product TQc.NPc forming said current power;
  • PWRmax represents said maximum power; and
  • PWRr represents a predetermined reference power.

2. The flight control indicator as claimed in claim 1, **characterized in that** said display means (5) display, on said display screen (7), a dial (12) which is graduated in percentages and which is fitted with a pointer (11) representing said characteristic sign, and of which the position on said dial (12) is representative of said power parameter calculated by said processing means (3).

3. The flight control indicator as claimed in claim 2, **characterized in that** said dial (12) comprises a first part (16) relating to the turboprop operating in traction mode and a second part (17) relating to said turboprop operating in reverse thrust mode.

4. The flight control indicator as claimed in one of claims 2 and 3, **characterized in that** it additionally comprises a monitoring means (18) for monitoring the sign of $\beta$-$\beta 0$ and for detecting when this sign turns negative, and **in that** said display means (5) are formed in such a way as to display said second part (17) of the dial (12) on said display screen (7) only when said monitoring means (18) has detected that said sign has turned negative.

5. An aircraft, **characterized in that** it comprises a flight control indicator (1) such as the one specified in any one of claims 1 to 4.


**Patentansprüche**

1. Steuerungsanzeige für ein Luftfahrzeug, die dazu bestimmt ist, einen Leistungsparameter mindestens eines Turboproptriebwerks des Luftfahrzeugs zu liefern, wobei das Turboproptriebwerk eine Gasturbine enthält, die mindestens eine Schraube in Drehung versetzt, wobei die Steuerungsanzeige (1) aufweist:

  - Informationsquellen (2), die mindestens die Werte von Parametern bezüglich des Luftfahrzeugs bestimmen;
  - Einrichtungen (3) zur Verarbeitung von Informationen, die von den Informationsquellen (2) empfangen werden; und
  - Anzeigeeinrichtungen (5), die auf mindestens einem Anzeigebildschirm (7) von den Verarbeitungseinrichtungen (3) stammende Daten und mindestens ein kennzeichnendes Vorzeichen (11) anzeigen können, das den Leistungsparameter veranschaulicht,

**dadurch gekennzeichnet, dass**:

- die Informationsquellen (2) außerdem die Werte von Parametern bezüglich der Schraube und der Turbine des Turboproptriebwerks bestimmen;
- die Verarbeitungseinrichtungen (3) ausgehend von den von den Informationsquellen (2) bestimmten Werten einen Leistungsparameter bestimmen, der das Verhältnis zwischen der aktuellen Leistung des Turboproptriebwerks und der ohne Luftentnahme auf Meereshöhe in Normalatmosphäre erhaltenen maximalen Leistung berücksichtigt; und
- die Verarbeitungseinrichtungen (3) den Leistungsparameter PIT mit Hilfe des folgenden Ausdrucks berechnen:

$$PIT = 100.A.(TQc.NPc - PWRr)/(PWRmax - PWRr)$$

in dem:

A dem Vorzeichen von $\beta-\beta0$ entspricht, wobei $\beta$ den gemessenen aktuellen Anstellwinkel der Blätter der Schraube des Turboproptriebwerks und $\beta0$ den Anstellwinkel am Boden beim Leerlauf der Blätter darstellt;
. TQc das aktuelle Drehmoment an der Welle der freien Turbine darstellt;
. NPc die gemessene aktuelle Drehzahl der Schraube des Turboproptriebwerks darstellt, wobei das Produkt TQc.NPc die aktuelle Leistung bildet;
. PWRmax die maximale Leistung darstellt; und
. PWRr eine vorbestimmte Bezugsleistung darstellt.

2. Steuerungsanzeige nach Anspruch 1, **dadurch gekennzeichnet, dass** die Anzeigeeinrichtungen (5) auf dem Anzeigebildschirm (7) eine Skalenscheibe (12) aufweisen, die eine Prozent-Maßeinteilung besitzt und mit einer Nadel (11) versehen ist, die das kennzeichnende Vorzeichen darstellt und deren Position auf der Skalenscheibe (12) für den Leistungsparameter repräsentativ ist, der von den Verarbeitungseinrichtungen (3) berechnet wird.

3. Steuerungsanzeige nach Anspruch 2, **dadurch gekennzeichnet, dass** die Skalenscheibe (12) einen ersten Teil (16) bezüglich eines Antriebsbetriebs des Turboproptriebwerks und einen zweiten Teil (17) bezüglich eines Schubumkehrbetriebs des Turboproptriebwerk aufweist.

4. Steuerungsanzeige nach einem der Ansprüche 2 und 3, **dadurch gekennzeichnet, dass** sie außerdem eine Überwachungseinrichtung (18) aufweist, um das Vorzeichen von $\beta-\beta0$ zu überwachen und um das Auftreten eines negativen Werts für dieses Vorzeichen zu erfassen, und dass die Anzeigeeinrichtungen (5) so ausgebildet sind, dass sie den zweiten Teil (17) der Skalenscheibe (12) auf dem Anzeigebildschirm (7) nur anzeigen, wenn die Überwachungseinrichtung (18) das Auftreten eines negativen Werts für das Vorzeichen erfasst hat.

5. Luftfahrzeug, **dadurch gekennzeichnet, dass** es eine in einem der Ansprüche 1 bis 4 dargelegte Steuerungsanzeige (1) aufweist.

Fig. 1

Fig. 2

Fig. 3A          Fig. 3B          Fig. 3C

EP 1 904 821 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 20040215375 A